# EUROPEAN PATENT SPECIFICATION

(11) **EP 3 358 317 B1**
(45) Date of publication and mention of the grant of the patent: **29.07.2020**
(21) Application number: 18154313.3
(22) Date of filing: 31.01.2018
(51) Int. Cl.: G01F 25/00, G01F 15/075

(54) **METER AND METER SYSTEM**
MESSGERÄT UND MESSSYSTEM
COMPTEUR ET SYSTÈME DE COMPTEUR

(30) Priority: 02.02.2017 JP 2017017345
(43) Date of publication of application: 08.08.2018
(73) Proprietor: Panasonic Intellectual Property Management Co., Ltd., Osaka-shi, Osaka 540-6207 (JP)
(72) Inventor: WATANABE, Takashi, Osaka-shi, Osaka 540-6207 (JP); KAMIMURA, Takanori, Osaka-shi, Osaka 540-6207 (JP); OMOTO, Yukihiro, Osaka-shi, Osaka 540-6207 (JP); KAWAUCHI, Akiyoshi, Osaka-shi, Osaka 540-6207 (JP)
(74) Representative: SSM Sandmair

(56) References cited:
- EP-A1- 2 180 219
- EP-A1- 2 579 006
- US-A1- 2011 000 310

## Description

### BACKGROUND

### 1. Technical Field

The present disclosure relates to a meter and a meter system for measuring a flow rate.

### 2. Description of the Related Art

There is practically used a wireless automatic meter-reading system which automatically reads the reading value of the meter which measures the usage amount of utilities such as gas, electricity, and water supply by wireless or the like.

Since meters of gas and water or the like, among these utilities, are difficult to be supplied with power from a commercial power supply, power saving is required in order that batteries are used as a power supply. There has been an attempt to obtain various information and improve a value by reading a more detailed usage fee by increasing the frequency of meter-reading from the viewpoint of energy management including the viewpoint of energy monitoring, and the visualization of energy usage amount, and the viewpoint of added value, by reading the meter-reading value in a short cycle, or by adding a new sensor.

From these viewpoints, various methods for reducing current consumption of a meter have been considered. From the viewpoint of added value, both the reduction of current consumption and responsiveness are important factors, and for example, Japanese Patent Unexamined Publication No. 2001-160990 discloses that there has been an attempt not only to reduce current consumption, but also to obtain responsiveness by intermittently driving a meter side and transmitting a synchronization signal in a short cycle by a master device.

US 2011/000310 A1 discloses that a function setting section sets security function information received from the outside via a communication line as security functions regarding the user of gas, and that according to the set security function, in the case that the operation conditions of the security function are satisfied, a monitoring section detects a problem during the use of gas and outputs a security signal to a control section (cf. Abstract). This document further discloses that based on the security signal from the monitoring section, the control section shuts off the supply of gas in the case that a phenomenon satisfying an operation condition of the set function having been set has occurred (cf. Abstract).

EP 2 180 219 A1 discloses that the pressure inside the gas passage detected by the pressure detector is compared with the first predetermined pressure which is set to be smaller than the gas supply pressure and higher than the atmospheric pressure, and when the pressure inside the gas passage is lower, disconnection of the gas inlet connector and the gas outlet connector is judged, and the pressure judging portion outputs a pressure drop signal indicating this state to the external device as a signal relating to the pressure drop such as an abnormality call request or an inquiry response via the communicating portion (cf. paragraph 0048).

EP 2 579 006 A1 discloses that a gas shutoff device is configured such that a control means determines that it inhibits a shutoff means from being returned from a shutoff state to a supply state, when a vibration has been detected by a vibration detecting means and a fluid pressure measured by a pressure measuring means has decreased to a value equal to or less than a predetermined pressure value (cf. Abstract).

### SUMMARY

However, whether there is the effect of power saving or not depends on the regulations of an area in which the meter is installed. Even if this method can be used, power saving may be realized at a certain level, but does not lead to the reduction of current consumption at a level higher than the certain level because this method is related to the limitation of a transmission time on the side of the master device or a reception interval on the side of the meter.

There is also a method of transmitting information to the master device in timings of a meter side and acquiring information from the master device after the transmission. According to this method, since the meter operates a communicator in a pause mode or a low consumption mode in timings other than the timing of the transmission, power saving can be achieved.

Since, when power saving can be achieved using this method, a cycle in which the meter transmits information to the master device is generally very long and the cycle is the same as a cycle in which the meter receives a response from the master device, the state of the meter is unknown to the master device for a long time, and even if the meter receives data for a setting change from the master device, the meter is in a situation where the setting change for a long time cannot be reflected.

The present disclosure is implemented to perform switching to a mode in which responsiveness is enhanced in accordance with an event occurring in the meter while a method for starting communication with the master device in timing of a meter side is adopted.

The present invention is defined by the independent claim. Further embodiment of the present invention is described in the dependent claim.

As a result, even though communication is started in the timing of the meter side, when there is the occurrence of an abnormality, it is possible to shorten a communication cycle with a concentrator or a server which are a host equipment and recognize the state of the meter in a short time, and also possible to promptly perform a setting change or the like on the meter from a host equipment side.

### BRIEF DESCRIPTION OF THE DRAWINGS

FIG. 1 is a block diagram generally showing a meter of a meter system according to a first exemplary embodiment;
FIG. 2 is a block diagram showing the entire meter system according to the first exemplary embodiment;
FIG. 3 is a process flowchart of the meter according to the first exemplary embodiment;
FIG. 4 is a communication sequence diagram of the meter system according to the first exemplary embodiment;
FIG. 5 is a block diagram showing a meter according to a second exemplary embodiment;
FIG. 6 is a process flowchart of the meter according to the second exemplary embodiment; and
FIG. 7 is a communication sequence diagram of the meter system according to the second exemplary embodiment.

### DETAILED DESCRIPTION

### First exemplary embodiment

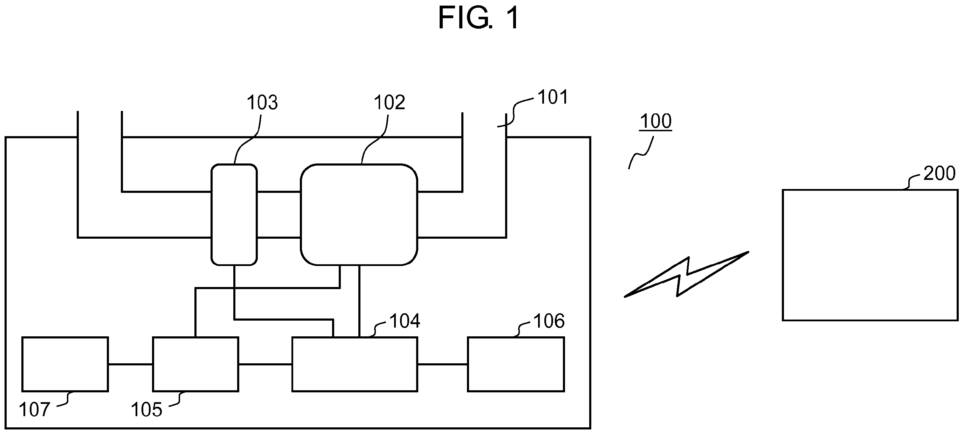

FIG. 1 shows a block diagram of a meter system according to a first exemplary embodiment. The meter system is constituted with meter 100 and concentrator 200 as a that communicates with meter 100.

Hereinafter, the components and functions in blocks will be described.

Meter 100 includes flow path 101, flow rate measurer 102, shutoff valve 103, calculator 104, abnormality detector 105, communicator 106, and vibration detector 107.

Flow path 101 is constituted within meter 100 and is a path through which a liquid or a gas to be measured passes. FIG. 1 shows that flow path 101 has a configuration with a pipe, but flow path 101 is sufficient to have a configuration with a path so that flow rate measurer 102 and shutoff valve 103 function as will be described later. For example, when there is adopted a configuration in which a housing (not shown) of meter 100 is used to provide a sealed structure, flow rate measurer 102 and shutoff valve 103 are directly connected from a connection port outside meter 100 so that it is unnecessary to form a special path.

Flow rate measurer 102 is a component for measuring the flow rate of the fluid to be measured that flows through flow path 101. Flow rate measurer 102 may be constituted using a circuit for calculating a flow rate by thermal fluctuation, using a method for calculating a flow rate by a propagation time of transmission and reception of ultrasound, or the like, or using a metering diaphragm when a gas is measured, but there is no particular limitation on the configuration adopted.

Flow rate measurer 102 has a function of outputting a flow rate of a flow at a predetermined time or outputting a signal such as a pulse to indicate that there has been a flow in a predetermined amount.

Shutoff valve 103 is an element for shutting off flow path 101 that is a path in which a flow is supplied through the flow rate measurer 102 from the outside of meter 100 to the outside. Shutoff valve 103 is constituted with an electromagnetic type valve, a valve using a stepping motor, and the like, and the shutoff valve can be opened or closed according to an instruction from calculator 104 as will be described later. When shutoff valve 103 is opened, the fluid to be measured is supplied to an external device connected with flow path 101 following to meter 100, and when shutoff valve 103 is closed, supply of the fluid to be measured to the external device is stopped.

Vibration detector 107 is constituted with a vibration sensor, an acceleration sensor, and the like, and outputs a signal in accordance with a detected vibration.

Abnormality detector 105 determines whether or not the vibration detected by vibration detector 107 is a vibration having a level equal to or more than a predetermined reference level, abnormality detector 105 determines that there is an earthquake when the vibration has a level equal to or more than the reference level, and outputs a presence or absence of the earthquake to calculator 104. As another abnormality, it is possible to add a function of detecting an abnormality when the flow rate of the fluid to be measured is measured by flow rate measurer 102 exceeds an expected maximum flow rate. Furthermore, it is also possible to add a function of detecting an abnormality in cases such as a case that a minute flow rate has been measured over a long cycle of time so that it is determined that there is leakage of the fluid to be measured, or a case that a flow rate exceeding the expected maximum use has been measured for a long time.

Communicator 106 is constituted with a transmission circuit, a reception circuit, a demodulation circuit, a modulation circuit, a VCO circuit, an antenna, or the like (none of them is not shown) and performs communication with a host equipment outside meter 100 according to a predetermined protocol, that is, performs transmitting to or receiving from the host equipment.

Calculator 104 generally includes a microcomputer, a memory, a clock, a storage device (none of them is shown), or the like. Calculator 104 is connected to flow rate measurer 102, shutoff valve 103, abnormality detector 105, and communicator 106 as will be described later. Calculator 104 calculates the integrated value based on an output signal from flow rate measurer 102 and stores the integrated value. When there is a signal output when abnormality detector 105 detects an abnormality and the signal is input to calculator 104, it is performed to control shutoff valve 103 to be closed.

Calculator 104 controls communicator 106 based on a predetermined communication protocol to transmit integrated values stored therein, output results of vibration detector 107, control results and states of shutoff valve 103, and the like to concentrator 200 as an external device which is a host equipment of meter 100.

Concentrator 200 communicates with meter 100 via a communicator (not shown).

In this constitution, meter 100 receives, via communicator 106, data transmitted from concentrator 200. The data shown here includes control information on shutoff valve 103, control information on flow rate measurer 102, control information on communicator 106, and the like.

Calculator 104 performs control based on data received via communicator 106. For example, based on the control information of the received data, shutoff valve 103 is opened, or the cycle of the periodical calling for communicating data using communicator 106 is changed.

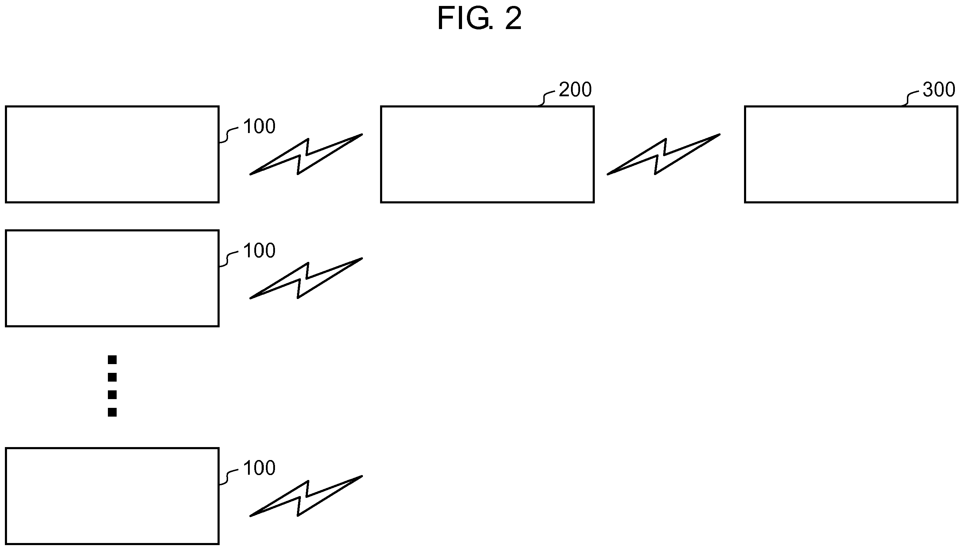

Subsequently, the operation of the meter system will be described with reference to FIG. 2.

As shown in FIG. 2, the meter system is constituted with a plurality of meters 100, concentrator 200 as a host equipment, or a server 300.

Here, meter 100 is connected to concentrator 200 using communicator 106 or using a predetermined protocol. Concentrator 200 is connected to server 300 based on a predetermined protocol. Server 300 can accommodate a plurality of concentrators 200, and concentrator 200 also can accommodate a plurality of meters 100. Meter 100 may be configured to be directly connected with server 300 based on a predetermined protocol.

The protocol between meter 100 and concentrator 200 is communicated, for example, using a specific low power radio capable of being driven with low power consumption, power saving Long Term Evolution (LTE) and the like, or General Packet Radio Service (GPRS) and the like. The communication between concentrator 200 and server 300 is performed, for example, by communication using a cellular network, power line communication, or the like.

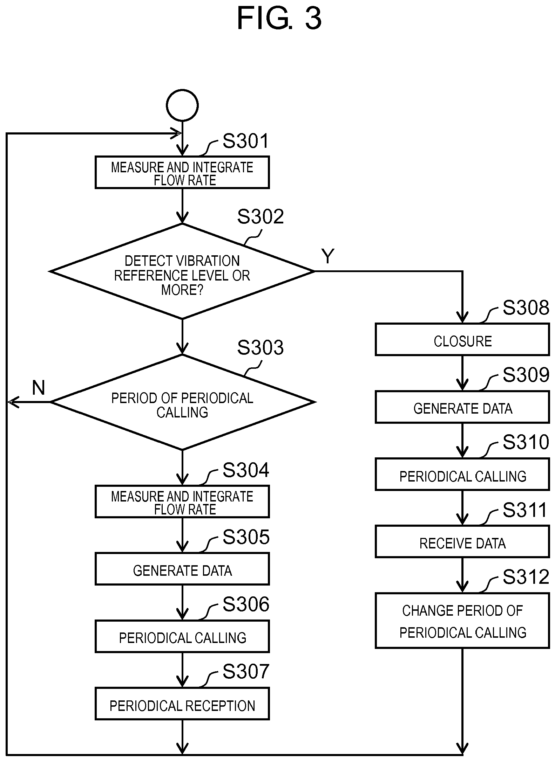

Subsequently, the processing flow of meter 100 will be described with reference to FIG. 3.

In meter 100, the flow rate measurer 102 measures a flow rate, and calculator 104 integrates the flow rate (step S301). Abnormality detector 105 confirms whether or not a vibration detected by vibration detector 107 is a vibration having a level equal to or more than a predetermined reference level (step S302). In a case where the vibration has a level less than the reference level, the processing proceeds to step S303.

Calculator 104 determines whether this time is the timing of a periodical calling for sending data including the integrated value calculated in step S301 to concentrator 200 via communicator 106 (step S303). In a case where this time is not the timing of the periodical calling, the processing returns to step S301. In a case where this time is the timing of the periodical calling, flow rate measurer 102 measures the flow rate, and the processing proceeds to an integration processing by calculator 104 (step S304). This timing of the periodical calling is set as a predetermined cycle in advance, and a calling from meter 100 side is periodically performed in the timing.

Subsequently, calculator 104 generates data including the integrated value of the flow rate integrated in step S304 based on the predetermined data format (step S305). Next, calculator 104 controls communicator 106 to periodically transmit data generated in step 305 to concentrator 200 or server 300 based on a predetermined protocol (step S306), that is, to perform the periodical calling. Subsequently, meter 100 periodically receives, via communicator 106, data transmitted from server 300 or concentrator 200, and returns to step S301 (step S307).

In step S302, when abnormality detector 105 detects that the vibration detected by vibration detector 107 is a vibration having a level equal to or more than a predetermined reference level, the processing proceeds to step S308, and calculator 104 controls shutoff valve 103 to be closed (step S308). Subsequently, calculator 104 generates data including that shutoff valve 103 is closed (step S309). Next, this data is transmitted to server 300 via concentrator 200 by communicator 106 in the periodical calling (step S310).

Server 300 generates data for setting a cycle, which determines the timing of the periodical calling performed by meter 100, to be shorter than a predetermined cycle, and transmits the generated data to meter 100 via concentrator 200. Meter 100 receives the data via communicator 106 (step S311). Subsequently, calculator 104 changes the cycle of the periodical calling stored (step S312) based on the data received in step S311.

By performing the above processes, meter 100 can immediately notify the state change of meter 100 by detecting a vibration having a level equal to or more than a defined level by vibration detector 107 and transmitting a closed state of shutoff valve 103 to concentrator 200 and server 300. Furthermore, by receiving the above transmission, server 300 can frequently acquire data from meter 100 by allowing the cycle of the periodical calling from the meter to be shorter than the predetermined cycle. In addition, responsiveness of the meter can be increased, and the changing operation of setting and controlling can be frequently performed.

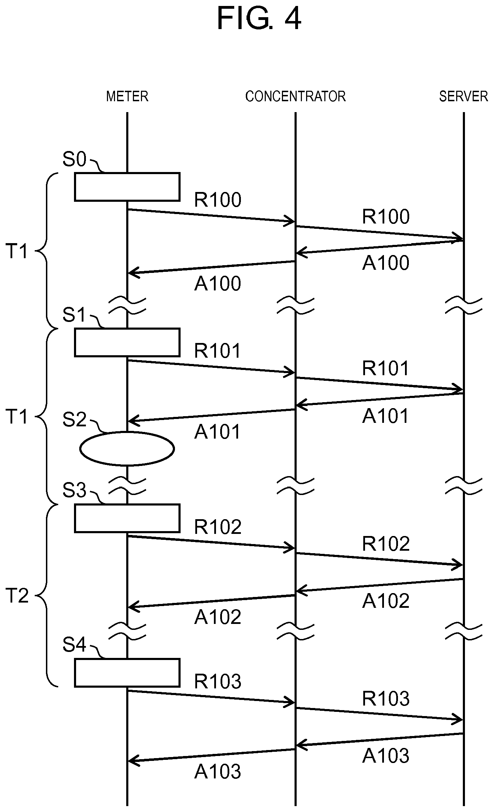

Hereinafter, as shown in FIG. 4, a communication procedure will be described using the communication sequence diagram among meter 100, concentrator 200, and server 300.

In the figure, meter 100 transmits, to concentrator 200, the integrated value calculated by calculator 104 as data R100 in the periodical calling (process S0), and concentrator 200 transfers data R100 itself to server 300. Next, when server 300 that has received data R100, transmits response data A100 indicating the reception completion of data R100 to concentrator 200, and concentrator 200 transfers response data A100 to meter 100.

When meter 100 receives response data A100, meter 100 waits for the next timing of the periodical calling as the completion of a periodical transmission, and similarly transmits data R101 (process S1). This operation is repeatedly performed in cycle as cycle T1 of the periodical calling.

Although the detailed descriptions are omitted, when meter 100 cannot receive response data A100, it is needless to say that meter 100 performs a process such as retransmitting the same data on the assumption that a transmission error has occurred.

Next, when abnormality detector 105 detects that the vibration detected by vibration detector 107 is a vibration having a level equal to or more than a predetermined reference level, calculator 104 performs the closing operation of shutoff valve 103 (process S2). Thereafter, meter 100 waits for the next timing of the periodical calling and transmits data R102 indicating the closing of shutoff valve 103 to concentrator 200 (process S3), and concentrator 200 transfers data R102 itself to server 300.

Next, server 300 that has received data R102, transmits response data A102 instructing to change the cycle of the periodical calling to concentrator 200, together with data on the reception completion of data R102, because data R102 indicates the closing of shutoff valve 103, and concentrator 200 transfers this response data A102 to meter 100.

Meter 100 changes cycle T1 of the periodical calling set until then to cycle T2 instructed by response data A102 received.

Accordingly, by setting this cycle T2 to a time (for example, one hour) to be shorter than cycle T1 (for example, twenty-four hours) of a normal periodical calling, the communication between meter 100 and server 300 can be frequently performed.

Therefore, it is possible to recognize the state change of meter 100 (that is, the closing of shutoff valve 103), and it is also possible to frequently monitor the state of meter 100 after the state change. Therefore, for example, if data transmitted from meter 100 includes the magnitude of the vibration detected by vibration detector 107, it is also possible to monitor the end state of the earthquake.

When it is determined that there is no problem that shutoff valve 103 is opened such as when there is the end of the earthquake, or so on, it is possible to give an instruction to open shutoff valve 103 from server 300 to meter 100, and in a short time, meter 100 can receive this instruction and open shutoff valve 103. At the same time, by giving an instruction to return the cycle of the periodical calling to the normal cycle, it is possible to return to a normal state.

In the above exemplary embodiment, the vibration having a level equal to or more than the predetermined level detected by vibration detector 107 is intended to be a vibration caused by the occurrence of a large earthquake so that safety cannot be secured.

In the above exemplary embodiment, as abnormality detector 105, the detection of the earthquake by vibration detector 107 has been described, but as another abnormality detectable by abnormality detector 105, there is an abnormality when a flow rate of the fluid to be measured by flow rate measurer 102 exceeds an expected maximum flow rate. Furthermore, there is an abnormality in cases such as a case that a minute flow rate has been measured over a long cycle of time so that it is determined that there is leakage of the fluid to be measured, or a case that a flow rate exceeding the expected maximum use has been measured for a long time.

As described above, in a meter system in which data such as integrated values are transmitted by the periodical calling from meter 100 and this data is collected by the server, it is possible to enhance responsiveness by increasing the frequency of communication in accordance with an event such as the abnormality occurred in the meter, and it is possible to promptly perform a treatment in accordance with the event such as the abnormality.

### Second exemplary embodiment

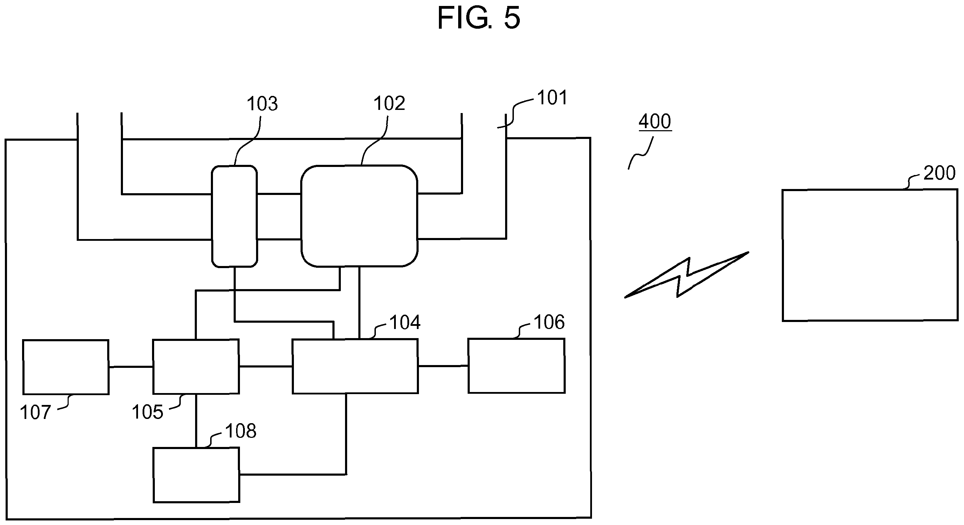

Next, the second exemplary embodiment will be described with reference to FIG. 5. This second exemplary embodiment is different from meter 100 (see FIG. 1) according to the first exemplary embodiment in that meter 400 has a cycle changer 108, and the same reference numerals as those in the first exemplary embodiment basically have the same structure, and descriptions thereof are omitted.

Here, when abnormality detector 105 detects that the vibration detected by vibration detector 107 is a vibration having a level equal to or more than a predetermined reference level, cycle changer 108 changes the timing of the periodical calling. When abnormality detector 105 detects an abnormality, it is possible to promptly notify the host equipment of the state of meter 400 by making a call immediately.

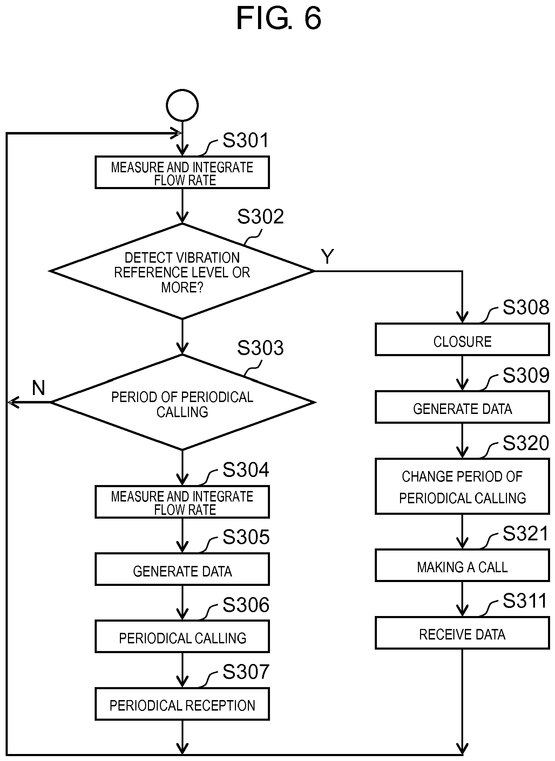

FIG. 6 is a process flowchart of meter 400 according to the exemplary embodiment, and the same processes as those of the first exemplary embodiment as shown in FIG. 4 are denoted by the same reference numerals, and descriptions thereof are omitted. The processes following to step S309 are different from the first exemplary embodiment. That is, there is a closing operation after the detection of an abnormality (step S308), and calculator 104 generates data including that shutoff valve 103 is closed (step S309), and then cycle changer 108 changes the cycle of the periodical calling to be a shorter cycle (step S320).

Thereafter, it is performed to transmit the data to server 300 via concentrator 200 by making a call (step S321). Thus, in server 300, it is possible to promptly recognize that meter 400 detects the abnormality, and it is possible to promptly perform a treatment in accordance with an event such as the abnormality.

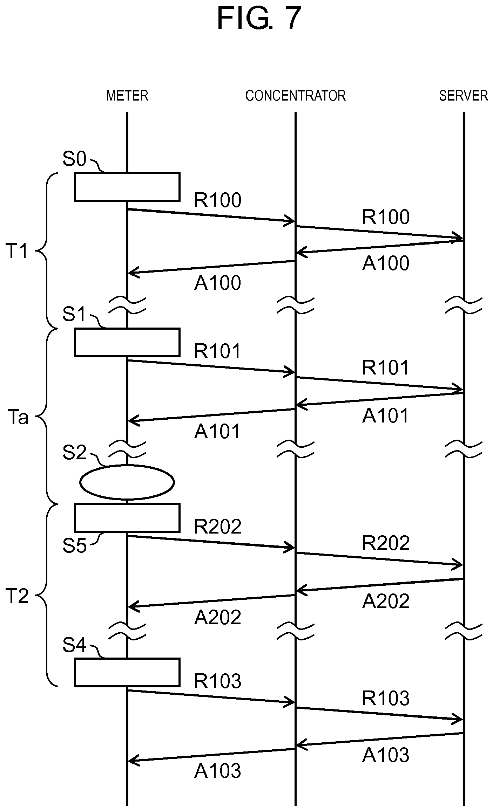

Next, as shown in FIG. 7, a communication procedure will be described using a communication sequence diagram among meter 400, concentrator 200, and server 300. The same processes as those of the first exemplary embodiment as shown in FIG. 5 are denoted by the same reference numerals, and descriptions thereof are omitted. The processes following to process S2 are different from the first exemplary embodiment.

After the detection of the abnormality, calculator 104 closes shutoff valve 103 (process S2). Thereafter, cycle changer 108 changes the cycle of the periodical calling to be a short cycle and transmits data R202 including the closing of shutoff valve 103 to concentrator 200 (process S5), and concentrator 200 transmits data R202 itself to server 300.

Server 300 that has received data R202, transmits response data A202 indicating the reception completion of data R202 to concentrator 200 because data R202 indicates the closing of shutoff valve 103, and concentrator 200 transfers response data A202 to meter 100.

Thus, in server 300, it is possible to promptly recognize that meter 400 detects the abnormality, and it is possible to promptly perform a treatment in accordance with an event such as the abnormality.

As described above, it is possible to frequently perform communication between meter 400 and server 300 by changing the cycle of the periodical calling to be shorter using cycle changer 108 provided on meter 400 side.

Therefore, it is possible to recognize the state change of meter 400 (that is, the closing of shutoff valve 103), and it is also possible to frequently monitor the state of meter 400 after the state change. Therefore, for example, if the data transmitted from meter 400 includes the magnitude of the vibration detected by vibration detector 107, it is also possible to monitor the end state of the earthquake.

The present disclosure is not limited to the above-described exemplary embodiments and may be implemented in various aspects without departing from the scope of the present disclosure. For example, in the exemplary embodiment, abnormality detector 105 and calculator 104 are described as individual components, but it is possible to incorporate the function of abnormality detector 105 as a part of the function of calculator 104. It is needless to say that it is also possible to incorporate cycle changer 108 as a part of the function of calculator 104.

As described above, according to a first aspect of the present disclosure, there is provided a meter system comprising: a meter including a flow path through which a fluid to be measured flows, an abnormality detector that detects an abnormality, a flow rate measurer that measures a flow rate of the fluid to be measured that flows through the flow path, a calculator that integrates the flow rate measured by the flow rate measurer and a communicator that transmits an integrated value integrated by the calculator as data in a predetermined cycle. There is provided a host equipment that receives data from the meter. Furthermore, when the abnormality detector detects an abnormality, the predetermined cycle is set to be shorter.

With this configuration, it may be implemented to perform switching to a mode in which responsiveness is enhanced in accordance with an event occurring in the meter while a method for starting communication with the host equipment in timing of the meter side is adopted.

In the meter system according to a second aspect of the present disclosure, particularly in the first aspect of the present disclosure, when the abnormality detector of the meter detects an abnormality, the communicator transmits data indicating that the abnormality is detected, to the host equipment in a predetermined cycle. When the host equipment receives the data indicating that the abnormality is detected, the host equipment transmits, to the meter, data for setting the predetermined cycle to be shorter, and the meter shortens the predetermined cycle based on the data received from the host equipment.

With this configuration, the host equipment can control the frequency of communication by performing the change of a transmission cycle.

In the meter system according to a third aspect of the present disclosure, particularly in the first aspect of the present disclosure, when the abnormality detector of the meter detects an abnormality, the communicator transmits data indicating that abnormality is detected, to the host equipment in an optional timing, and then a predetermined cycle is to be shorter.

With this configuration, by performing the change of the transmission cycle by the meter, it is possible to immediately notify the host equipment of the occurrence of the abnormality.

In the meter system according to a fourth aspect of the present disclosure, particularly in any one of the first to third aspects of the present disclosure, the meter includes a shutoff that shut offs the flow path, and when the abnormality detector detects an abnormality, the calculator shutoffs the flow path by the shutoff.

With this configuration, it is possible to safely handle the fluid to be measured.

In the meter system according to a fifth aspect of the present disclosure, in particular, in any one of the first to fourth aspects of the present disclosure, the meter includes a vibration detector that detects a vibration, and when the magnitude of the vibration detected by vibration detector is equal to or more than a predetermined value, the abnormality detector determines that there is an abnormality.

With this configuration, it is possible to appropriately cope with a vibration such as an earthquake.

According to a sixth aspect of the present disclosure, there is provided a meter including a flow path through which a fluid to be measured flows, an abnormality detector that detects an abnormality, a flow rate measurer that measures a flow rate of the fluid to be measured that flows through the flow path, a calculator that integrates the flow rate measured by the flow rate measurer, and a communicator that transmits an integrated value integrated by the calculator as data in a predetermined cycle. When the abnormality detector detects an abnormality, the communicator transmits data indicating that the abnormality is detected, to the host equipment in the timing of a predetermined cycle and then the calculator changes the predetermined cycle based on data received from the host equipment.

With this configuration, it may be implemented to perform switching to a mode in which responsiveness is enhanced in accordance with an event occurring in the meter while a method for starting communication with the host equipment in timing of the meter side is adopted.

According to a seventh aspect of the present disclosure, there is provided a meter including a flow path through which a fluid to be measured flows, an abnormality detector that detects an abnormality, a flow rate measurer that measures a flow rate of the fluid to be measured that flows through the flow path, a calculator that integrates the flow rate measured by the flow rate measurer, a communicator that transmits an integrated value integrated by the calculator as data in a predetermined cycle, and a cycle changer that changes the predetermined cycle. The cycle changer shortens the predetermined cycle when the abnormality detector detects the abnormality.

With this configuration, it may be implemented to perform switching to a mode in which responsiveness is enhanced in accordance with an event occurring in the meter while a method for starting communication in timing of the meter side is adopted.

According to an eighth aspect of the present disclosure, particularly in any one of the sixth or seventh aspects of the present disclosure, the meter includes a shutoff that shutoffs the flow path, and when the abnormality detector detects an abnormality, the calculator shutoffs the flow path by the shutoff.

With this configuration, it is possible to safely handle the fluid to be measured.

According to a ninth aspect of the present disclosure, particularly in any one of the sixth to eighth aspects of the present disclosure, the meter includes a vibration detector that detects a vibration, and when the magnitude of the vibration detected by vibration detector is equal to or more than a predetermined value, the abnormality detector determines that there is an abnormality.

With this configuration, it is possible to appropriately cope with a vibration such as an earthquake.

As described above, in the meter system according to the present disclosure, it is possible to perform switching to a mode in which responsiveness is enhanced in accordance with an event occurring in the meter while a method for starting communication with the master device as the host equipment in the timing of the meter side is adopted. Therefore, in a communication system in which a communication method for making a periodical call using a device having a battery as a power supply is used, it is possible to promptly cope with the occurrence of an abnormality.

### REFERENCE MARKS IN THE DRAWINGS

100, 400: meter
101: flow pass
102: flow rate measurer
103: shutoff valve
104: calculator
105: abnormality detector
106: communicator
107: vibration detector
108: cycle changer
200: concentrator (host equipment)
300: server (host equipment)

## Claims

1. A meter system comprising:
a meter (100; 400) including a flow path (101) through which a fluid to be measured flows, an abnormality detector (105) that detects an abnormality, a flow rate measurer (102) that measures a flow rate of the fluid to be measured that flows through the flow path (101), a calculator (104) that integrates the flow rate measured by the flow rate measurer (102), a communicator (106) that transmits an integrated value integrated by the calculator (104) as data in a predetermined cycle, and a vibration detector (107) that detects a vibration; and
a host equipment (200, 300) that receives the data from the meter (100; 400),
wherein, when a magnitude of the vibration detected by the vibration detector (107) is equal to or greater than a predetermined value, the abnormality detector (105) determines that there is an abnormality,
**characterised in that**,
when the abnormality detector (105) detects the abnormality, the meter (100; 400) transmits data indicating that the abnormality is detected, to the host equipment (200, 300) by the communicator (106) in the predetermined cycle,
when the host equipment (200, 300) receives the data indicating that the abnormality is detected, the host equipment (200, 300) transmits, to the meter (100; 400), data for setting the predetermined cycle to be shorter, and
the meter (100; 400) shortens the predetermined cycle based on the data received from the host equipment (200, 300), or
when the abnormality detector (105) detects the abnormality, the meter (100; 400) transmits the data indicating that the abnormality is detected, to the host equipment (200, 300) by the communicator (106) in an optional timing, and then the meter (100; 400) shortens the predetermined cycle.

2. The meter system of claim 1,
wherein the meter (100; 400) further includes a shutoff (103) that shuts off the flow path (101), and
when the abnormality detector detects an abnormality, the calculator (104) shuts off the flow path (101) by the shutoff (103).

## Patentansprüche

1. Zählersystem, enthaltend:
einen Zähler (100; 400), der einen Flusspfad (101), durch den ein zu zählendes Fluid fließt, einen Anomaliedetektor (105), der eine Anomalie detektiert, ein Flussratenmessmittel (102), das eine Flussrate des zu zählenden Fluids, das durch den Flusspfad (101) fließt, misst, einen Rechner (104), der die von dem Flussratenmessmittel (102) gemessene Flussrate integriert, ein Kommunikationsmittel (106), das einen von dem Rechner (104) integrierten Integralwert als Daten mit einer vorbestimmten Periode übermittelt, und einen Vibrationsdetektor (107), der eine Vibration detektiert, enthält; und
ein Hauptgerät (200, 300), das die Daten von den Zähler (100; 400) empfängt, wobei, wenn ein Wert der von dem Vibrationsdetektor (107) detektierten Vibration größer oder gleich einem vorbestimmten Wert ist, der Anomalitätsdetektor (105) ermittelt, dass eine Anomalität besteht,
**dadurch gekennzeichnet, dass**
der Zähler (100; 400) Daten, die anzeigen, dass eine Anomalie detektiert worden ist, an das Hauptgerät (200, 300) durch das Kommunikationsmittel (106) mit der vorbestimmten Periode übermittelt, wenn der Anomaliedetektor (105) die Anomalie detektiert,
das Hauptgerät (200, 300) Daten zum Einstellen einer verkürzten vorbestimmten Periode an den Zähler (100; 400) sendet, wenn das Hauptgerät (200, 300) die Daten empfängt, die anzeigen, dass die Anomalie detektiert worden ist, und
der Zähler (100; 400) die vorbestimmte Periode basierend auf den vom Hauptgerät (200, 300) empfangenen Daten verkürzt oder
der Zähler (100; 400) die Daten, die anzeigen, dass die Anomalie detektiert worden ist, an das Hauptgerät (200, 300) durch das Kommunikationsmittel (106) mit einer optionalen Zeiteinstellung sendet, wenn der Anomaliedetektor (105) die Anomalie detektiert, und der Zähler (100; 400) die vorbestimmte Periode dann verkürzt.

2. Zählersystem gemäß Anspruch 1, bei dem der Zähler (100; 400) ferner eine Abschaltung (103), die den Flusspfad (101) abschaltet, und der Rechner (104) dem Flusspfad (101) durch die Abschaltung (103) abschaltet, wenn der Anomaliedetektor die Anomalie detektiert.

## Revendications

1. Système de compteur comprenant :
un compteur (100 ; 400) comprenant un trajet d'écoulement (101) par lequel un liquide à mesure s'écoule, un détecteur d'anomalie (105) qui détecte une anomalie, un instrument de mesure du taux d'écoulement (102) qui mesure un taux d'écoulement du liquide à mesurer qui s'écoule par le trajet d'écoulement (101), une calculatrice (104) qui intègre le taux d'écoulement mesuré par l'instrument de mesure du taux d'écoulement (102), un dispositif de communication (106) qui transmet une valeur intégrée par la calculatrice (104) en tant que données dans un cycle prédéterminé et un détecteur de vibration (107) qui détecte une vibration ; et
un équipement hôte (200, 300) qui reçoit les données depuis le compteur (100 ; 400),
dans lequel, lorsqu'une ampleur de la vibration détectée par le détecteur de vibration (107) est égale ou supérieure à une valeur prédéterminée, le détecteur d'anomalie (105) détermine qu'il existe une anomalie,
**caractérisé en ce que**,
lorsque le détecteur d'anomalie (105) détecte l'anomalie, le compteur (100 ; 400) transmet des données indiquant que l'anomalie est détectée, à l'équipement hôte (200, 300) par le dispositif de communication (106) dans le cycle prédéterminé,
lorsque l'équipement hôte (200, 300) reçoit les données indiquant que l'anomalie est détectée, l'équipement hôte (200, 300) transmet, au compteur (100 ; 400), des données permettant de régler le cycle prédéterminé pour être plus court, et
le compteur (100 ; 400) raccourcit le cycle prédéterminé en fonction des données reçues depuis l'équipement hôte (200, 300), ou
lorsque le détecteur d'anomalie (105) détecte l'anomalie, le compteur (100 ; 400) transmet les données indiquant que l'anomalie est détectée, à l'équipement hôte (200, 300) par le dispositif de communication (106) à un rythme facultatif, et puis le compteur (100 ; 400) raccourcit le cycle prédéterminé.

2. Système de compteur selon la revendication 1,
dans lequel le compteur (100 ; 400) comprend en outre un dispositif d'arrêt (103) qui arrête le trajet d'écoulement (101), et lorsque le détecteur d'anomalie détecte une anomalie, la calculatrice (104) arrête le trajet d'écoulement (101) par le dispositif d'arrêt (103).
